# EUROPÄISCHE PATENTSCHRIFT

(11) **EP 4 375 145 B1**
(45) Veröffentlichungstag und Bekanntmachung des Hinweises auf die Patenterteilung: **30.07.2025**
(21) Anmeldenummer: 23209845.9
(22) Anmeldetag: 14.11.2023
(51) Int. Cl.: B60R 13/10, B60Q 1/26

(54) **DIGITALES NUMMERNSCHILD, SYSTEM UND VERFAHREN ZUM BETREIBEN EINES SOLCHEN**
DIGITAL LICENSE PLATE, SYSTEM AND METHOD FOR OPERATING SAME
PLAQUE D'IMMATRICULATION NUMÉRIQUE, SYSTÈME ET PROCÉDÉ DE FONCTIONNEMENT DE CELLE-CI

(30) Priorität: 24.11.2022 DE 102022131087
(43) Veröffentlichungstag der Anmeldung: 29.05.2024
(73) Patentinhaber: Klaiqi, Sahit, 80798 München (DE)
(72) Erfinder: Klaiqi, Sahit, 80798 München (DE)
(74) Vertreter: Laufhütte, Dieter

(56) Entgegenhaltungen:
- DE-A1- 102006 025 023
- DE-A1- 102008 043 830
- DE-B3- 102018 200 669
- DE-U1- 202010 006 825
- US-A1- 2011 078 933
- US-A1- 2022 185 204

## Beschreibung

Die vorliegende Erfindung betrifft ein digitales Nummernschild für ein Kraftfahrzeug, ein System zum Betreiben eines digitalen Nummernschilds sowie ein Verfahren hierfür.

Nummernschilder, bzw. Kfz-Kennzeichen werden in der Regel von Kraftfahrzeugzulassungsstellen ausgegeben und sind eine eindeutige Kennung von zulassungspflichtigen Fahrzeugen, die am Straßenverkehr teilnehmen dürfen. Nummernschilder dienen dabei als Nachweis für die ordnungsgemäße Zulassung des mit dem Nummernschild versehenen Kraftfahrzeugs und ermöglichen darüber hinaus auch eine gesicherte Rückverfolgung zum Halter des Kraftfahrzeugs. In der Regel bestehen Nummernschilder aus einem dünnen Aluminiumblech, in welches das amtliche Kennzeichen eingeprägt wird. Dabei kann das Kennzeichen aus einer Folge von Buchstaben und Zahlen zusammengesetzt sein, wobei die dahinterstehende Systematik im logischen Aufbau der Kennzeichennummernfolge typischerweise von Land zu Land unterschiedlichen Restriktionen unterworfen ist.

Darüber hinaus haben Nummernschilder aus Kunststoff in den letzten Jahren verstärkt Verbreitung gefunden und sich als Alternative zu den Schildern aus Aluminium etabliert.

Nachteilhaft an der Verwendung der bekannten Arten von Nummernschildern aus Aluminium oder Kunststoff ist, dass bei einem Fahrzeugwechsel oder einer Abmeldung des Kfz in der Regel eine Weiterverwendung des Nummernschilds nicht möglich ist und dieses entsorgt werden muss. Darüber hinaus ist auch das übliche Procedere für eine Anmeldung, eine Ummeldung oder eine Abmeldung eines Kfz äußerst aufwendig und zeitintensiv, da dies in der Regel vor Ort an einer amtlichen Zulassungsstelle durchgeführt werden muss. Für den Halter eines Fahrzeugs ist es demnach erforderlich, die Zulassungsstelle zu besuchen, Wartezeiten in Kauf zu nehmen oder einen Zulassungsdienst zu beauftragen, was nicht unerhebliche Ressourcen in Form von Zeit und/oder Geld in Anspruch nimmt.

Die DE 10 2008 043 830 A1 offenbarten digitales Nummernschild, dass die Merkmale aus dem Oberbegriff des Anspruchs 1 aufweist.

Die vorliegende Erfindung soll die oben aufgeführten Nachteile überwinden oder zumindest abmildern und so ein verbessertes Nummernschild schaffen, das den vorbekannten Umsetzungen eines Nummernschilds überlegen ist. Ein System zum Betreiben des digitalen Nummernschilds erzielt dabei darüber hinausgehende Vorteile.

Dies gelingt mit einem digitalen Nummernschild, welches sämtliche Merkmale des Anspruchs 1 aufweist.

Demnach ist ein digitales Nummernschild für ein Kraftfahrzeug vorgesehen, das eine Anzeigevorrichtung zum Darstellen einer Abfolge von Buchstaben und/oder Ziffern, um eine Kfz-Kennzeichennummer zu bilden, eine Speichereinheit zum Ablegen von Dateien, eine Authentifizierungseinheit zum Authentifizieren einer in der Speichereinheit abgelegten Datei auf eine vorbestimmte Herkunft, eine Verschlüsselungseinheit zum Ver- und Entschlüsseln einer in der Speichereinheit abgelegten Datei, eine Sende- und/oder Empfangseinheit zum drahtlosen oder drahtgebundenen Interagieren mit einem Server, und eine Steuereinheit umfasst, die dazu ausgelegt ist, die Anzeigevorrichtung anzusteuern, um durch die Anzeigevorrichtung eine in einer Datei enthaltene Kfz-Kennzeichennummer darzustellen, wenn die Authentifizierungseinheit bestätigt, dass die Datei von der vorbestimmten Herkunft stammt.

Das digitale Nummernschild weist also eine Anzeigevorrichtung auf, die dazu in der Lage ist, eine Buchstaben- bzw. Zeichenfolge zur eindeutigen Identifizierung eines mit dem Nummernschild versehenen Fahrzeugs darzustellen. Um nun aber Missbrauch zu verhindern, ist es mit dem digitalen Nummernschild nicht möglich, eine beliebige von einem Nutzer frei wählbare Kennzeichenfolge darzustellen, sondern es wird bei einer Datei, welche die durch die Anzeigevorrichtung darzustellende Kennzeichenfolge enthält, zunächst deren Authentizität in Bezug auf die Herkunft überprüft, sodass sichergestellt wird, dass diese von einem zulässigen Emittenten (bspw. Zulassungsstelle oder dergleichen) stammt.

Ist also die verlässliche Herkunft der Datei mithilfe der Authentifizierung bestätigt, wird die Anzeigevorrichtung mithilfe einer Steuereinheit dazu angewiesen, die in der Datei enthaltene Kfz-Kennzeichenfolge darzustellen.

In der Regel erfolgt die Kommunikation zwischen dem digitalen Nummernschild und dem Emittenten der Datei (in der Regel eine Zulassungsstelle bzw. ein unter der Kontrolle der Zulassungsstelle stehender Server) mithilfe eines Servers, sodass das digitale Nummernschild eine Sende- und/oder Empfangseinheit zum Kommunizieren mit dem Server aufweist.

Um die Sicherheit der Kommunikation dabei weiter zu erhöhen, kann dabei vorgesehen sein, dass die Verschlüsselungseinheit zum Ver- und Entschlüsseln verwendet wird, um lediglich verschlüsselt zu kommunizieren.

Möglich ist dabei eine Kommunikation über das Internet (mobile Daten, WLAN oder kabelgebunden) oder auch eine Satellitenverbindung.

Der Vorteil an dem digitalen Nummernschild ist, dass die Anzeige einer Kfz-Kennzeichenfolge nur dann wiedergegeben wird, wenn die die Kennzeichenfolge enthaltende Datei auch tatsächlich von dem verlässlichen Emittenten (der vorbestimmten Herkunft, in der Regel also die Zulassungsstelle) stammt. Es ist also nicht möglich, dass eine beliebige, nicht von der vorbestimmten Herkunft stammende Datei zu einem Anzeigen einer Kfz-Kennzeichenfolge führt. Dies verringert die Wahrscheinlichkeit eines Missbrauchs signifikant, da es nicht mehr möglich ist, beliebige Buchstaben und Ziffern auf ein Nummernschild aufzuprägen, wie es bspw. bei Aluminiumschildern der Fall ist.

Nach der vorliegenden Erfindungist weiter vorgesehen, dass die Steuereinheit ferner dazu ausgelegt ist, eine in einer Datei enthaltene Kfz-Kennzeichennummer nur innerhalb einer vorgegebenen Zeitspanne durch die Anzeigevorrichtung unverändert darstellen zu lassen, sodass das kontinuierliche Anzeigen einer gültigen Kfz-Kennzeichennummer das wiederholte Empfangen und Prüfen der Authentizität einer die Kfz-Kennzeichennummer enthaltenden Datei erfordert.

Erfolgt also nicht innerhalb der vorgegebenen Zeitspanne eine Aktualisierung bzw. Validierung der durch die Anzeigevorrichtung wiedergegebenen Kfz-Kennzeichenfolge, kann bspw. ein zusätzlicher Hinweis durch die Anzeigevorrichtung oder das Wechseln in eine bestimmte Farbe vorgenommen werden, um kenntlich zu machen, dass die Zulassung des mit dem Nummernschild versehenen Kfz möglicherweise nicht mehr gültig ist.

Weiter ist dabei vorgesehen, dass die Zeitspanne, welche definiert, wie lange die Anzeigevorrichtung die in der Datei enthaltene Kfz-Kennzeichennummer unverändert darstellt, durch einen Bestandteil der Datei selbst festgelegt ist, wobei vorzugsweise die Zeitspanne 1 Tag, 1 Woche, 1 Monat oder 1 Jahr betragen kann.

Die Veränderung der Kennzeichennummer kann - wie bereits gesagt - der Wechsel der Kfz-Kennzeichenfolge in eine von der Norm abweichende Farbe sein, bspw. zur Farbe rot oder grün, damit Dritte leicht erkennen können, dass die Zulassung dieses Fahrzeug möglicherweise nicht mehr gilt. Auch ist es möglich zur Kenntlichmachung zusätzliche Anzeigeelemente durch die Anzeigevorrichtung wiedergeben zu lassen.

Es ist demnach also erforderlich, innerhalb der vorgegebenen Zeitspanne einen erneuten Datenaustausch mit dem Server durchzuführen, damit die Kfz-Kennzeichennummer unverändert durch die Anzeigevorrichtung dargestellt wird.

Beispielhaft kann die vorbestimmte Zeitspanne 1 Tag betragen, sodass täglich ein Datenaustausch stattzufinden hat, da anderenfalls die Anzeigevorrichtung ihr Erscheinungsbild entsprechend verändert. Möglich in diesem Zusammenhang wäre auch die gezielte Beantragung einer Verlängerung der vorbestimmten Zeitspanne (bspw. bei der Zulassungsstelle), sollte man bereits vorab wissen, dass man sich für einen vorbestimmten Zeitraum in einem Gebiet aufhält, in welchem die Verbindung zum Internet (bzw. eine Verbindung zu einem Satelliten) problematisch sein kann. Dies bietet sich insbesondere dann an, wenn ein längerer Aufenthalt mit dem mit dem digitalen Nummernschild versehenen Kfz in Regionen geplant ist, in welchem bereits vorab bekannt ist, dass ein entsprechender Datenaustausch sich als schwierig gestalten könnte.

Nach einer weiteren vorteilhaften Modifikation der vorliegenden Erfindung kann vorgesehen sein, dass bei einem Ablauf der vorgegebenen Zeitspanne ohne das wiederholte Empfangen und/oder erfolgreiche Prüfen der Authentizität einer die Kfz-Kennzeichennummer enthaltenden Datei, die Steuereinheit ferner dazu ausgelegt ist, die Darstellung der Anzeigevorrichtung zu verändern, um auf eine mögliche Invalidität der Kfz-Kennzeichennummer hinzuweisen, wobei insbesondere die Veränderung der Anzeigevorrichtung die Darstellung der Kfz-Kennzeichennummer in einer bestimmten von der Norm abweichenden Farbe, bspw. rot, umfasst.

Darüber hinaus kann nach einer Fortbildung der vorliegenden Erfindung vorgesehen sein, dass die Datei ferner einen Bestandteil aufweist, der nach erfolgreicher Prüfung der Datei durch die Authentifizierungseinheit die Steuereinheit dazu veranlasst, die Darstellung der Anzeigevorrichtung zu verändern, um verschiedene mit der Kfz-Kennzeichennummer in Verbindung stehende Eigenschaften durch die Anzeigevorrichtung darzustellen, insbesondere um bei einer als gestohlen registrierten Kfz-Kennzeichennummer die Darstellung der Kfz-Kennzeichennummer in einer bestimmten von der Norm abweichenden Farbe, bspw. grün, zu bewirken.

Unabhängig von dem Überschreiten der vorbestimmten Zeitspanne kann auch mithilfe der durch das digitale Nummernschild zu verarbeitenden Datei vorgesehen sein, die ursprüngliche Anzeige durch die Anzeigevorrichtung zu modifizieren und bspw. auf ein als gestohlen gemeldetes Fahrzeug oder im Zuge einer polizeilichen Ermittlung auf ein gesuchtes Fahrzeug hinzuweisen. Eine Kommunikation kann demnach auch serverseitig initiiert werden, um Änderungen an der Anzeigevorrichtung des digitalen Nummernschilds durchzuführen.

Weiter kann nach der vorliegenden Erfindung vorgesehen sein, dass die Informationen über die vorbestimmte Herkunft, auf welche die Authentifizierungseinheit eine Datei hin überprüft, in dem Nummernschild voreingestellt ist, vorzugsweise derart, dass eine Veränderung der Informationen über die vorbestimmte Herkunft nach einer ursprünglichen Initialisierung in dem digitalen Nummernschild nicht mehr möglich ist.

Um die Möglichkeiten von Missbrauch weiter einzuschränken, kann in dem digitalen Nummernschild vorab fest eingestellt sein, von welcher Herkunft die Datei zum Anzeigen des Kfz-Kennzeichennummer sein muss, damit die dort hinterlegte Kfz-Kennzeichennummer auch tatsächlich durch die Anzeigevorrichtung angezeigt wird. Bspw. kann die auf die Herkunft bezogene Information in einem nicht veränderbaren Speicherbausteinen abgelegt sein, der lediglich ausgelesen und nicht beschrieben werden kann. Dies kann bspw. mit einem nicht flüchtigen, nicht löschbaren PROM-Speicherbausteinen umgesetzt werden, wobei PROM für Programmable Read-Only Memory steht.

Nach einer vorteilhaften Ausführungsform der vorliegenden Erfindung kann vorgesehen sein, dass die Anzeigevorrichtung ein digitales Display ist, insbesondere ein LCD-, LED- und/oder ein OLED-Display.

Ferner kann vorgesehen sein, dass jedes Nummernschild zum Kommunizieren mit einem Server mit einer eindeutigen Kennung versehen ist. Dies ermöglicht die punktgenaue Kommunikation mit einem Nummernschild und verhindert, dass Nachrichten an Abnehmer gesendet werden, die nicht die beabsichtigten Kommunikationspartner sind.

So kann bei einer erstmaligen Verwendung des digitalen Nummernschilds vorgesehen sein, dass die eindeutige Kennung an den Server übermittelt wird, der für das Ausstellen der Dateien, in denen die Kfz-Kennzeichennummer enthalten ist, verantwortlich ist. Durch das Empfangen dieser eindeutigen Kennung wird dem Server das Vorhandensein dieses digitalen Nummernschilds bewusst, sodass der Server die weiteren Schritte veranlassen kann und, sollten sämtliche Voraussetzungen hierfür erfüllt sein, auch die Datei mit der Kfz-Kennzeichenfolge an das digitale Nummernschild übermittelt. Für die zielgerichtete Übermittlung ist die eindeutige Kennung des digitalen Nummernschilds dem Server bekannt. Die Kommunikation zwischen dem Server und dem digitalen Nummernschild kann dabei verschlüsselt stattfinden, um Missbrauch oder dergleichen zu erschweren.

Die Erfindung betrifft ferner ein System zum Betreiben eines digitalen Nummernschilds, das ein digitales Nummernschild nach einem der vorhergehend diskutierten Aspekte, und einen Zentralserver umfasst, der über eine Datenbank verfügt und dazu ausgelegt ist, über eine Sende- und/oder Empfangseinheit mit einem digitalen Nummernschild zu kommunizieren, wobei in der Datenbank sämtliche dem Zentralserver bekannte Nummernschilder (bzw. jeweilige eindeutige Kennung) enthalten sind, und der Zentralserver dazu ausgelegt ist, eine Datei an ein digitales Nummernschild zu versenden, woraufhin dieses nach einer erfolgreichen Prüfung der Authentizität der empfangenen Datei die in der Datei enthaltenen Kfz-Kennzeichennummer sowie etwaige weitere in der Datei enthaltene Zusatzinformationen durch die Anzeigevorrichtung wiedergibt.

Der Zentralserver kann dabei auch eine Verschlüsselungseinheit zum Ver- und Entschlüsseln aufweisen, falls die Kommunikation mit dem digitalen Nummernschild verschlüsselt stattfinden sollte.

In der Regel steht der Zentralserver dabei unter amtlicher Kontrolle, bspw. wird dieser durch die Zulassungsstelle betrieben. Wird also bspw. die eindeutige Kennung zusammen mit dem Fahrzeugschein eines künftigen Halters digital an die Zulassungsstelle gesendet, kann diese nach Prüfung und Freigabe das Kennzeichen in einer Datei an das zugehörige Nummernschild senden, sodass das Kennzeichen freigegeben (aktiviert) wird. Ein Gang zur Zulassungsstelle ist nicht mehr erforderlich.

Ferner kann nach der Erfindung vorgesehen sein, dass der Zentralserver mindestens eine Schnittstelle für ein Zugreifen auf die Datenbank aufweist, um Eigenschaften eines in der Datenbank hinterlegten Nummernschilds zu modifizieren, vorzugsweise wobei die mindestens eine Schnittstelle einen Zugriff der Zulassungsstelle, der Polizei, des Zolls oder von anderen hoheitliche Aufgaben übernehmenden Gesellschaften ermöglicht.

Wie bereits erläutert, kann der Zentralserver dabei unter Kontrolle der Zulassungsstelle stehen. Natürlich ist aber auch denkbar, dass andere staatliche Institutionen, bspw. die Polizei oder der Zoll Zugriff auf den Zentralserver haben, um entsprechende Modifikationen an einem jeweiligen Nummernschild durchzuführen. Wird bspw. ein Kfz mit einem spezifischen Kennzeichen als gestohlen gemeldet, kann die Polizei auf den Zentralserver zugreifen und den entsprechenden Datenbankeintrag so modifizieren, dass eine Datei an das zugehörige Nummernschild gesendet wird, sodass dieses in seiner Anzeigevorrichtung so verändert wird, wodurch Dritte unmittelbar erkennen, dass es sich vorliegend wohl um ein gestohlenes bzw. polizeilich gesuchtes Fahrzeug handelt. Vorteilhafterweise geschieht sei dies dadurch, dass die Farbe der Kfz-Kennzeichennummer gewechselt wird. Dem Fachmann ist aber klar, dass auch andere Möglichkeiten zum Kenntlichmachen eines gestohlenen Fahrzeugs durch Verändern der Anzeigevorrichtung von der Erfindung umfasst sind. Vorstellbar ist auch eine blinkende Wiedergabe der Kfz-Kennzeichennummer, um auf eine Unregelmäßigkeit mit dem das digitale Nummernschild aufweisende Kfz hinzuweisen.

Ferner kann vorgesehen sein, dass auch die Fälligkeit der Hauptuntersuchung in der Datenbank des Zentralserver enthalten ist und, sollte eine fällige Hauptuntersuchung des Fahrzeugs nicht erfolgreich durchgeführt worden sein, bzw. sollte eine entsprechende Aktualisierung der Fälligkeit der Hauptuntersuchung der Datenbank nicht erfolgt sein, beispielsweise mithilfe eines Zugriffs eines Prüfinstituts (TÜV, Dekra, etc.) auf die Datenbank, eine entsprechende Übermittlung an das digitale Nummernschild erfolgt, die in der Anzeigevorrichtung den Hinweis bewirkt, dass die Hauptuntersuchung nicht mehr gültig ist. Die Veränderung der Anzeigevorrichtung kann dabei beliebig ausgestaltet sein und insbesondere auch das Wechseln der Kfz-Kennzeichennummer in eine spezifische Farbe umfassen.

Die Erfindung betrifft ferner ein Verfahren zum Ausführen eines Systems zum Betreiben eines digitalen Nummernschilds, insbesondere ein solches System nach einem der vorhergehend vorgestellten Aspekte, und umfasst die Schritte: Übersenden einer eindeutigen Kennung eines digitalen Nummernschilds an einen Zentralserver, vorzugsweise zusammen mit ergänzenden Dokumenten zur Zulassung eines Kfz (insbesondere der Zulassungsbescheinigung Teil 2, welche früher auch Fahrzeugbrief genannt worden ist), Erstellen und Senden einer Datei von dem Zentralserver an das digitale Nummernschild, wobei in der Datei eine Kfz-Kennzeichennummer zum Darstellen durch das Nummernschild enthalten ist, wobei vorzugsweise zusätzlich zu der Kfz-Kennzeichennummer weitere über die Anzeigevorrichtung des Nummernschilds anzuzeigende Hinweise in der Datei enthalten sind, Empfangen der von dem Zentralserver gesendeten Datei durch die Empfangs- und/oder Sendeeinheit und Ablegen der Datei in der Speichereinheit, Prüfen der Authentizität der in der Speichereinheit abgelegten Datei auf ihre Herkunft und, falls das Prüfen der Herkunft erfolgreich abgeschlossen worden ist, Weiterleiten einer Bestätigung hierüber an die Steuereinheit, und Darstellen der in der Datei enthaltenen Kfz-Kennzeichennummer sowie etwaige weitere in der Datei enthaltene Hinweise durch die Anzeigevorrichtung, falls die Steuereinheit eine Bestätigung über die erfolgreiche Prüfung der Authentizität erhalten hat.

So kann die Abmeldung eines Fahrzeugs durchgeführt werden, in dem die spezifische Kennung eines Nummernschilds zusammen mit etwaigen weiteren Nachweisen digital an die Zulassungsstelle gesendet werden, welche die gewünschte Abmeldung durchführt, sodass die in dem Zentralserver hinterlegte Datei für das Nummernschild entsprechend modifiziert wird. Bei der anschließenden vorm Zentralserver initiierten Übermittlung der Datei an das zugehörige Nummernschild beinhaltet diese die Instruktion, das Kennzeichen zu sperren. Dies wird bspw. durchgeführt indem die Kfz-Kennzeichennummer in einer bestimmten Farbe wiedergegeben wird oder keine Kfz-Kennzeichennummer mehr durch die Anzeigevorrichtung dargestellt wird.

Dabei kann vorgesehen sein, dass die eindeutige Kennung des digitalen Nummernschilds, welche an einen Zentralserver übersendet wird, vorab in dem digitalen Nummernschild mithilfe der Ver- und Entschlüsselungseinheit verschlüsselt wird, um die Kommunikation mit dem Zentralserver noch sicherer zu gestalten.

Ferner ist nach dem erfindungsgemäßen Verfahren vorgesehen, dass die von dem Zentralserver an das digitale Nummernschild zu sendende Datei eine Zeitspanne enthält, welche angibt, wie lange die Kfz-Kennzeichennummer ohne Veränderung der Anzeigevorrichtung anzeigbar ist. Die Zeitspanne definiert also die Gültigkeit der durch die Anzeigevorrichtung angezeigten Kfz-Kennzeichennummer.

So kann grundsätzlich gefordert sein, dass zur unveränderten (gültigen) Darstellung der Kfz-Kennzeichennummer durch die Anzeigevorrichtung einmal am Tag eine Verbindung zu dem Zentralserver herzustellen ist, da anderenfalls die Steuereinheit dazu ausgelegt ist, nach Ablauf der vorbestimmten Zeitspanne die Anzeigevorrichtung entsprechend zu modifizieren, damit Dritten unmittelbar ersichtlich wird, dass das mit dem Nummernschild versehene Kfz möglicherweise nicht mehr zugelassen ist.

Weitere Einzelheiten, Merkmale und Vorteile der Erfindung werden anhand der nachfolgenden Figurenbeschreibung ersichtlich. Dabei zeigen:

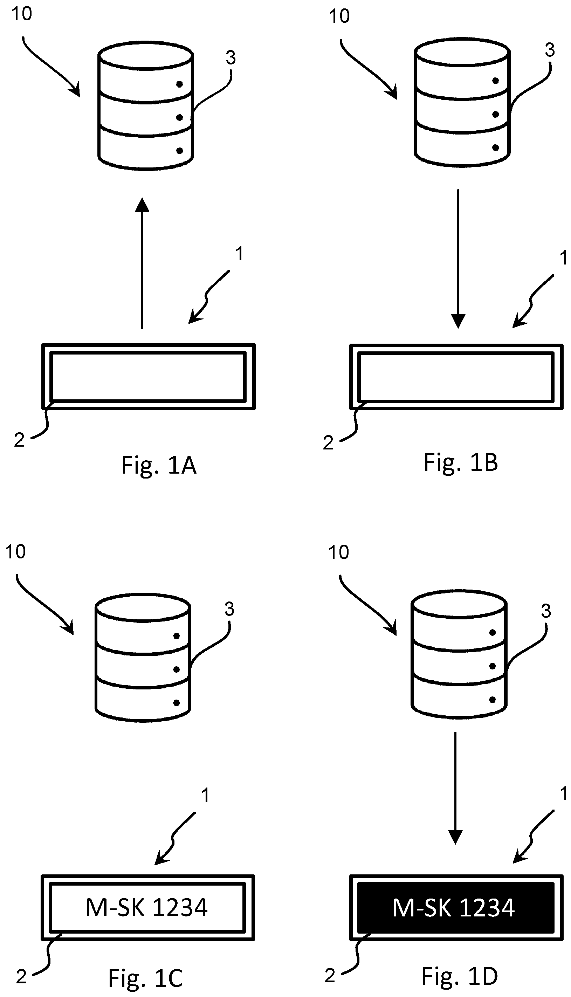

- Fig. 1A-D:: jeweils eine schematische Übersicht eines von mehreren Zuständen des Systems zum Betreiben eines digitalen Nummernschilds.

Fig. 1A zeigt ein System 10 zum Betreiben eines digitalen Nummernschilds 1 während einer Initialisierung. Man erkennt, dass die Anzeigevorrichtung 2 noch keine Kfz-Kennzeichennummer darstellt, da die hierfür notwendige Datei noch nicht erhalten worden ist. Im Zuge einer erstmaligen Verwendung des digitalen Nummernschilds 1 und einer Neuanmeldung eines Kfz ist vorgesehen, dass das digitale Nummernschild 1 in Kontakt mit einem Server 3 tritt und dem Server 3 dabei die eindeutige Kennung des digitalen Nummernschilds 1 übermittelt. Darüber hinaus können ergänzende für die Zulassung erforderlichen Dokumente übermittelt werden, um den Antrag auf Neuzulassung eines Kfz zu vervollständigen. Bspw. kann hier die Zulassungsbescheinigung Teil 2 (früher auch Fahrzeugbrief) digital oder auch postalisch an die Zulassungsstelle übermittelt werden, damit sämtliche für die Zulassung erforderliche Unterlagen vorliegen.

Dabei kann vorgesehen sein, dass die von dem digitalen Nummernschild 1 an den Server 3 übersandten Informationen mithilfe der Ver- und Entschlüsselungseinheit verschlüsselt übertragen werden, um Missbrauch zu erschweren oder zu verhindern.

Nach Erhalt der eindeutigen Kennung des digitalen Nummernschilds führt der Server 3 eine Datenbanksuche durch, in der geprüft wird, ob die eindeutige Kennung des Nummernschilds schon in der Datenbank abgelegt ist. Ist dies nicht der Fall, wird ein neuer Eintrag in der Datenbank angelegt und geprüft, ob sämtliche Voraussetzungen für die Zulassung des Fahrzeugs vorliegen. Ist dies der Fall, wird dem durch die eindeutige Kennung identifizierbaren digitalen Nummernschild 1 eine Kfz-Kennzeichennummer zugewiesen und der Datenbankeintrag entsprechend aktualisiert.

Fig. 1B zeigt das Übersenden der die Kfz-Kennzeichennummer enthaltenden Datei an das digitale Nummernschild 1. Nach erfolgreicher Freigabe durch den Server 3, in der festgehalten ist, dass dem digitalen Nummernschild 1 eine Kfz-Kennzeichennummer zugewiesen wird, wird eine die Kfz-Kennzeichennummer enthaltende Datei generiert und an das digitale Nummernschild 1 übersendet. Das Übersenden dieser Datei kann dabei verschlüsselt erfolgen.

Fig. 1C zeigt das System 10 nachdem das digitale Nummernschild 1 die die Kfz-Kennzeichennummer enthaltende Datei von dem Server 3 erhalten hat. Nach einer etwaigen Entschlüsselung durch die Ver- und Entschlüsselungseinheit wird die vom Server 3 übersandte Datei durch die Authentifizierungseinheit überprüft. Dabei wird sichergestellt, dass die Datei auch tatsächlich von dem Server 3 stammt und nicht etwa ein nicht autorisierter Dritter eine solche Datei versendet. Hat die Authentifizierungseinheit dabei die Herkunft der Datei von dem Server 3 bestätigt, kann die Steuereinheit in dem digitalen Nummernschild 1 die Anzeigevorrichtung 2 dazu anweisen, die in der Datei enthaltene Kfz-Kennzeichenfolge darzustellen. In Figur 1C ist diese beispielhafte Kfz-Kennzeichenfolge "M - SK 1234". Dem Fachmann ist klar, dass jedwede andere Kombination von Buchstaben, Ziffern und Sonderzeichen als Kennzeichenfolge verwendet werden kann.

Das digitale Nummernschild 1 kann nun an einem Kfz angebracht werden, sofern das Nummernschild nicht bereits fest mit einem Kfz verbaut ist.

Fig. 1D zeigt einen Zustand des Systems 10, in dem ausgehend von dem Server 3 eine Datei an das digitale Nummernschild 1 gesendet wird, um die Darstellung der Kfz-Kennzeichenfolge zu verändern. Bspw. kann das mit dem digitalen Nummernschild 1 versehene Kfz als gestohlen gemeldet worden sein, woraufhin über eine Schnittstelle die Polizei auf die Datenbank zugreift und den zu dem Nummernschild zugehörigen Datenbankeintrag entsprechend modifiziert. Der Server 3 sendet dann die entsprechend aktualisierte Datei an das digitale Nummernschild 1, woraufhin in diesem, nachdem die Authentizität der von dem Server 3 versandten Datei in dem digitalen Nummernschild 1 festgestellt worden ist, die ursprüngliche Darstellung der Anzeigevorrichtung verändert wird, um Dritten sofort kenntlich zu machen, dass es sich bei dem mit dem Nummernschild versehenen Kfz möglicherweise um ein gestohlenes Fahrzeug handelt.

Vorliegend wurde hierfür die Anzeigevorrichtung 2 so angesteuert, dass die Kfz-Kennzeichenfolge, welche in ihrer ursprünglichen Fassung eine schwarze Buchstaben- und Zahlenkombination auf weißem Hintergrund ist, in ihrer Farbgestaltung invertiert wird, so dass die Kfz-Kennzeichenfolge in weißer Farbe auf einem schwarzen Hintergrund dargestellt ist. Dem Fachmann ist klar, dass auch ein Wechsel der Farbe der Buchstaben- und Zahlenkombination der Kfz-Kennzeichenfolge, eine blinkende Darstellung, das Hinzufügen weiterer Hinweise in der Anzeigevorrichtung oder dergleichen eine mögliche Umsetzung zum Darstellen eines möglicherweise gestohlenen Fahrzeugs sein kann. Genauso gut ist es möglich, weitere zusätzliche Symbole im Bereich der Anzeigevorrichtung einzublenden, um auf eine vermeintlicherweise gestohlenes Fahrzeug hinzuweisen.

## Patentansprüche

1. Digitales Nummernschild (1) für ein Kraftfahrzeug, umfassend:
eine Anzeigevorrichtung (2) zum Darstellen einer Abfolge von Buchstaben und/oder Ziffern, um eine Kfz-Kennzeichennummer zu bilden,
eine Speichereinheit zum Ablegen von Dateien,
eine Authentifizierungseinheit zum Authentifizieren einer in der Speichereinheit abgelegten Datei auf eine vorbestimmte Herkunft,
eine Verschlüsselungseinheit zum Ver- und Entschlüsseln einer in der Speichereinheit abgelegten Datei,
eine Sende- und/oder Empfangseinheit zum drahtlosen oder drahtgebundenen Interagieren mit einem Server (3), und
eine Steuereinheit, die dazu ausgelegt ist, die Anzeigevorrichtung (2) anzusteuern, um durch die Anzeigevorrichtung (2) eine in einer Datei enthaltene Kfz-Kennzeichennummer darzustellen, wenn die Authentifizierungseinheit bestätigt, dass die Datei von der vorbestimmten Herkunft stammt,
**dadurch gekennzeichnet, dass**
die Steuereinheit ferner dazu ausgelegt ist, eine in einer Datei enthaltene Kfz-Kennzeichennummer nur innerhalb einer vorgegebenen Zeitspanne durch die Anzeigevorrichtung (2) unverändert darstellen zu lassen, sodass das kontinuierliche Anzeigen einer gültigen Kfz-Kennzeichennummer das wiederholte Empfangen und Prüfen der Authentizität einer die Kfz-Kennzeichennummer enthaltenden Datei innerhalb der vorgegebenen Zeitspanne erfordert, wobei
die Zeitspanne, welche definiert, wie lange die Anzeigevorrichtung (2) die in der Datei enthaltene Kfz-Kennzeichennummer unverändert darstellt, durch einen Bestandteil der Datei selbst festgelegt ist.

2. Nummernschild (1) nach dem vorhergehenden Anspruch 1, wobei vorzugsweise die Zeitspanne 1 Tag, 1 Woche, 1 Monat oder 1 Jahr betragen kann.

3. Nummernschild (1) nach einem der vorhergehenden Ansprüche, wobei bei einem Ablauf der vorgegebenen Zeitspanne ohne das wiederholte Empfangen und/oder erfolgreiche Prüfen der Authentizität einer die Kfz-Kennzeichennummer enthaltenden Datei, die Steuereinheit ferner dazu ausgelegt ist, die Darstellung der Anzeigevorrichtung (2) zu verändern, um auf eine mögliche Invalidität der Kfz-Kennzeichennummer hinzuweisen, wobei insbesondere die Veränderung der Anzeigevorrichtung (2) die Darstellung der Kfz-Kennzeichennummer in einer bestimmten von der Norm abweichenden Farbe, bspw. rot, umfasst.

4. Nummernschild (1) nach einem der vorhergehenden Ansprüche, wobei die Datei ferner einen Bestandteil aufweisen kann, der nach erfolgreicher Prüfung der Datei durch die Authentifizierungseinheit die Steuereinheit dazu veranlasst, die Darstellung der Anzeigevorrichtung (2) zu verändern, um verschiedene mit der Kfz-Kennzeichennummer in Verbindung stehende Eigenschaften durch die Anzeigevorrichtung (2) darzustellen, insbesondere um bei einer als gestohlen registrierten Kfz-Kennzeichennummer die Darstellung der Kfz-Kennzeichennummer in einer bestimmten von der Norm abweichenden Farbe, bspw. grün, zu bewirken.

5. Nummernschild (1) nach einem der vorhergehenden Ansprüche, wobei die Informationen über die vorbestimmte Herkunft, auf welche die Authentifizierungseinheit eine Datei hin überprüft, in dem Nummernschild (1) voreingestellt ist, vorzugsweise derart, dass eine Veränderung der Informationen über die vorbestimmte Herkunft nach einer ursprünglichen Initialisierung nicht möglich ist.

6. Nummernschild (1) nach einem der vorhergehenden Ansprüche, wobei die Anzeigevorrichtung (2) ein digitales Display ist, insbesondere ein LCD-, LED- und/oder ein OLED-Display.

7. Nummernschild (1) nach einem der vorhergehenden Ansprüche, wobei jedes Nummernschild (1) zum Kommunizieren mit einem Server (3) mit einer eindeutigen Kennung versehen ist.

8. System (10) zum Betreiben eines digitalen Nummernschilds (1), umfassend:
ein digitales Nummernschild (1) nach einem der vorhergehenden Ansprüche,
einen Zentralserver (3), der über eine Datenbank verfügt und dazu ausgelegt ist, über eine Sende- und/oder Empfangseinheit mit einem digitalen Nummernschild (1) zu kommunizieren, wobei
in der Datenbank sämtliche dem Zentralserver (3) bekannte Nummernschilder (1) enthalten sind, und
der Zentralserver (3) dazu ausgelegt ist, eine Datei an ein digitales Nummernschild (1) zu versenden, woraufhin dieses nach einer erfolgreichen Prüfung der Authentizität der empfangenen Datei die in der Datei enthaltenen Kfz-Kennzeichennummer sowie etwaige weitere in der Datei enthaltene Zusatzinformationen durch die Anzeigevorrichtung (2) wiedergibt.

9. System (10) nach dem vorhergehenden Anspruch 8, wobei der Zentralserver (3) mindestens eine Schnittstelle für ein Zugreifen auf die Datenbank aufweist, um Eigenschaften eines in der Datenbank hinterlegten Nummernschilds (1) zu modifizieren, vorzugsweise wobei die mindestens eine Schnittstelle einen Zugriff der Zulassungsstelle, der Polizei, des Zolls oder andere hoheitliche Aufgaben übernehmenden Gesellschaften ermöglicht.

10. Verfahren zum Ausführen eines Systems (10) zum Betreiben eines digitalen Nummernschilds (1), insbesondere ein solches System (10) nach dem vorhergehenden Anspruch 8 oder 9, umfassend die Schritte:
Übersenden einer eindeutigen Kennung eines digitalen Nummernschilds (1) an einen Zentralserver (3), vorzugsweise zusammen mit ergänzenden Dokumenten zur Zulassung eines Kfz,
Erstellen und Senden einer Datei von dem Zentralserver (3) an das digitale Nummernschild (1), wobei in der Datei eine Kfz-Kennzeichennummer zum Darstellen durch das Nummernschild (1) enthalten ist, wobei vorzugsweise zusätzlich zu der Kfz-Kennzeichennummer weitere über die Anzeigevorrichtung (2) des Nummernschilds (1) anzuzeigende Hinweise in der Datei enthalten sind,
Empfangen in der von dem Zentralserver (3) gesendeten Datei durch die Empfangs- und/oder große Sendeeinheit und Ablegen der Datei in der Speichereinheit,
Prüfen der Authentizität der in der Speichereinheit abgelegten Datei auf ihre Herkunft und, falls das Prüfung der Herkunft erfolgreich abgeschlossen worden ist, Weiterleiten einer Bestätigung hierüber an die Steuereinheit, und
Darstellen der in der Datei enthaltenen Kfz-Kennzeichennummer sowie etwaige weitere in der Datei enthaltene Hinweise durch die Anzeigevorrichtung (2), falls die Steuereinheit eine Bestätigung über die erfolgreiche Prüfung der Authentizität erhalten hat,
**dadurch gekennzeichnet, dass**
die von dem Zentralserver (3) an das digitale Nummernschild (1) zu sendende Datei eine Zeitspanne enthält, welche angibt, wie lange die Kfz-Kennzeichennummer ohne Veränderung durch die Anzeigevorrichtung (2) anzeigbar ist.

## Claims

1. Digital license plate (1) for a motor vehicle, comprising:
a display device (2) for displaying a sequence of letters and/or digits to form a vehicle registration number,
a storage unit for storing files,
an authentication unit for authenticating a file stored in the storage unit to a predetermined origin,
an encryption unit for encrypting and decrypting a file stored in the storage unit,
a transmitting and/or receiving unit for wireless or wired interaction with a server (3), and
a control unit configured to control the display device (2) to display, by the display device (2), a vehicle registration number contained in a file if the authentication unit confirms that the file originates from the predetermined origin,
**characterized in that**
the control unit is further configured to cause a vehicle registration number contained in a file to be displayed, unchanged, by the display device (2) only within a predetermined time period, so that the continuous display of a valid vehicle registration number requires the repeated receipt and verification of the authenticity of a file containing the vehicle registration number within the predetermined time period, wherein
the time period defining how long the display device (2) displays the vehicle registration number contained in the file unchanged is defined by a component of the file itself.

2. License plate (1) according to the preceding claim 1, wherein the time period can preferably be 1 day, 1 week, 1 month or 1 year.

3. License plate (1) according to any one of preceding claims, wherein if the predetermined time period elapses without the repeated receipt and/or successful verification of the authenticity of a file containing the vehicle registration number, the control unit is further configured to change the display of the display device (2) in order to indicate a possible invalidity of the vehicle registration number, wherein in particular the change of the display device (2) comprises the display of the vehicle registration number in a specific color deviating from the standard, e.g. red.

4. License plate (1) according to any one of the preceding claims, wherein the file can further comprise a component which, after successful verification of the file by the authentication unit, causes the control unit to change the display of the display device (2) in order to display various properties associated with the vehicle registration number by the display device (2), in particular in order to cause the vehicle registration number to be displayed in a specific color deviating from the standard, e.g. green, in the case of a vehicle registration number registered as stolen.

5. License plate (1) according to any one of the preceding claims, wherein the information regarding the predetermined origin, in respect of which the authentication unit checks a file, is preset in the license plate (1), preferably in such a way that it is no longer possible to change the information regarding the predetermined origin after an original initialization.

6. License plate (1) according to any one of the preceding claims, wherein the display device (2) is a digital display, in particular an **LCD, LED** and/or an **OLED** display.

7. License plate (1) according to any one of the preceding claims, wherein each license plate (1) is provided with a unique identifier for communicating with a server (3).

8. System (10) for operating a digital license plate (1), said system comprising:
a digital license plate (1) according to any one of the preceding claims, and
a central server (3) which has a database and is configured to communicate with a digital license plate (1) via a transmitting and/or receiving unit, wherein
the database contains all license plates (1) known to the central server (3), and
the central server (3) is configured to send a file to a digital license plate (1), whereupon the latter, after successful verification of the authenticity of the received file, displays the vehicle registration numbers contained in the file and any further additional information contained in the file by means of the display device (2).

9. The system (10) according to the preceding claim 9, wherein the central server (3) has at least one interface for accessing the database in order to modify properties of a license plate (1) stored in the database, preferably wherein the at least one interface enables access by the registration authority, the police, customs or other companies performing sovereign tasks.

10. A method for running a system (10) for operating a digital license plate (1), in particular a system (10) according to preceding claim 8 or 9, comprising the steps of:
transmitting a unique identifier of a digital license plate (1) to a central server (3), preferably together with supplementary documents for the registration of a motor vehicle,
creating and transmitting a file from the central server (3) to the digital license plate (1), wherein the file contains a vehicle registration number for display by the license plate (1), wherein preferably, in addition to the vehicle registration number, further information to be displayed via the display device (2) of the license plate (1) is contained in the file,
receiving the file sent from the central server (3) by the receiving and/or large transmitting unit and storing the file in the storage unit,
verifying the authenticity of the file stored in the storage unit for its origin and, if the verification of the origin has been successfully completed, forwarding a confirmation of this to the control unit, and
displaying the vehicle registration number contained in the file and any other information contained in the file by the display device (2) if the control unit has received a confirmation of the successful authenticity verification,
**characterized in that**
the file to be sent from the central server (3) to the digital license plate (1) contains a time period which specifies how long the vehicle registration number can be displayed by the display device (2) without change.

## Revendications

1. Plaque d'immatriculation numérique (1) pour un véhicule automobile, comprenant :
un dispositif d'affichage (2) pour afficher une séquence de lettres et/ou de chiffres afin de former un numéro d'immatriculation de véhicule,
une unité de stockage pour stocker des fichiers,
une unité d'authentification pour authentifier un fichier stocké dans l'unité de stockage quant à une origine prédéterminée,
une unité de cryptage pour crypter et décrypter un fichier stocké dans l'unité de stockage,
une unité d'émission et/ou de réception pour une interaction sans fil ou avec fil avec un serveur (3), et
une unité de commande, qui est conçue pour commander le dispositif d'affichage (2) afin d'afficher, par l'intermédiaire du dispositif d'affichage (2), un numéro d'immatriculation de véhicule contenu dans un fichier lorsque l'unité d'authentification confirme que le fichier provient de l'origine prédéterminée,
**caractérisé en ce que**
l'unité de commande est en outre conçue pour permettre au dispositif d'affichage (2) d'afficher un numéro d'immatriculation de véhicule contenu dans un fichier de manière inchangée uniquement dans un laps de temps prédéfini, de telle sorte que l'affichage continu d'un numéro d'immatriculation de véhicule valide nécessite la réception et la vérification répétées de l'authenticité d'un fichier contenant le numéro d'immatriculation de véhicule dans le laps de temps prédéfini, où
le laps de temps qui définit la durée pendant laquelle le dispositif d'affichage (2) affiche de manière inchangée le numéro d'immatriculation de véhicule contenu dans le fichier est déterminé par un constituant du fichier lui-même.

2. Plaque d'immatriculation (1) selon la revendication 1 précédente, où, de préférence, le laps de temps peut être de 1 jour, 1 semaine, 1 mois ou 1 an.

3. Plaque d'immatriculation (1) selon l'une quelconque des revendications précédentes, où, lorsque le laps de temps prédéfini s'est écoulé sans que l'authenticité d'un fichier contenant le numéro d'immatriculation de véhicule ait été reçue et/ou vérifiée avec succès de manière répétée, l'unité de commande est en outre conçue pour modifier l'affichage du dispositif d'affichage (2) afin de signaler une éventuelle invalidité du numéro d'immatriculation de véhicule, notamment la modification du dispositif d'affichage (2) comprenant l'affichage du numéro d'immatriculation de véhicule dans une couleur particulière différente de la norme, par exemple rouge.

4. Plaque d'immatriculation (1) selon l'une quelconque des revendications précédentes, où le fichier peut en outre présenter un constituant qui, après vérification réussie du fichier par l'unité d'authentification, amène l'unité de commande à modifier la représentation du dispositif d'affichage (2) pour afficher différentes caractéristiques liées au numéro d'immatriculation de véhicule par le dispositif d'affichage (2), notamment pour faire apparaître le numéro d'immatriculation de véhicule dans une couleur particulière différente de la norme, par exemple vert, dans le cas d'un numéro d'immatriculation de véhicule enregistré comme volé.

5. Plaque d'immatriculation (1) selon l'une quelconque des revendications précédentes, où les informations quant à l'origine prédéterminée pour lesquelles l'unité d'authentification vérifie un fichier sont préétablies dans la plaque d'immatriculation (1), de préférence de telle sorte qu'une modification des informations sur l'origine prédéterminée n'est pas possible après une initialisation initiale.

6. Plaque d'immatriculation (1) selon l'une quelconque des revendications précédentes, où le dispositif d'affichage (2) est un écran numérique, notamment un écran LCD, **LED** et/ou OLED.

7. Plaque d'immatriculation (1) selon l'une quelconque des revendications précédentes, où chaque plaque d'immatriculation (1) est munie d'un identifiant unique pour communiquer avec un serveur (3).

8. Système (10) de gestion d'une plaque d'immatriculation numérique (1), comprenant :
une plaque d'immatriculation numérique (1) selon l'une quelconque des revendications précédentes,
un serveur central (3) disposant d'une base de données et conçu pour communiquer avec une plaque d'immatriculation numérique (1) via une unité d'émission et/ou de réception, où
la base de données contient toutes les plaques d'immatriculation (1) connues du serveur central (3), et
le serveur central (3) est conçu pour envoyer un fichier à une plaque d'immatriculation numérique (1), à la suite de quoi celle-ci, après une vérification réussie de l'authenticité du fichier reçu, reproduit le numéro d'immatriculation de véhicule contenu dans le fichier ainsi que d'éventuelles autres informations supplémentaires contenues dans le fichier par le dispositif d'affichage (2).

9. Système (10) selon la revendication 8 précédente, où le serveur central (3) présente au moins une interface pour accéder à la base de données afin de modifier des caractéristiques d'une plaque d'immatriculation (1) enregistrée dans la base de données, de préférence où l'au moins une interface permet un accès du service d'immatriculation, de la police, des douanes ou d'autres sociétés assumant des tâches de souveraineté.

10. Procédé de mise en œuvre d'un système (10) de gestion d'une plaque d'immatriculation numérique (1), notamment d'un tel système (10) selon la revendication 8 ou 9 précédente, comprenant les étapes consistant à :
envoyer un identifiant unique d'une plaque d'immatriculation numérique (1) à un serveur central (3), de préférence conjointement avec des documents complémentaires pour l'immatriculation d'un véhicule,
créer et envoyer un fichier du serveur central (3) à la plaque d'immatriculation numérique (1), où le fichier contient un numéro d'immatriculation de véhicule pour la représentation par la plaque d'immatriculation (1), le fichier contenant de préférence, en plus du numéro d'immatriculation de véhicule, d'autres indications à afficher via le dispositif d'affichage (2) de la plaque d'immatriculation (1),
recevoir le fichier envoyé par le serveur central (3) par l'unité de réception et/ou de grande transmission et stocker le fichier dans l'unité de stockage,
vérifier l'authenticité du fichier stocké dans l'unité de stockage quant à son origine et, si la vérification de l'origine a été effectuée avec succès, transmettre une confirmation de celle-ci à l'unité de commande, et
afficher le numéro d'immatriculation de véhicule contenu dans le fichier ainsi que d'éventuelles autres indications contenues dans le fichier par le dispositif d'affichage (2), si l'unité de commande a reçu une confirmation de la vérification réussie de l'authenticité,
**caractérisé en ce que**
le fichier à envoyer par le serveur central (3) à la plaque d'immatriculation numérique (1) contient un laps de temps qui indique pendant combien de temps le numéro d'immatriculation de véhicule peut être affiché sans modification par le dispositif d'affichage (2).
